# EUROPÄISCHE PATENTANMELDUNG

(11) **EP 1 346 621 A1**
(43) Veröffentlichungstag der Anmeldung: **24.09.2003**
(21) Anmeldenummer: 02006433.3
(22) Anmeldetag: 22.03.2002
(51) Int. Cl.: A01B 23/02, A01B 33/10

(54) **Zinken für ein Bodenbearbeitungsgerät**

(71) Anmelder: Rabe Agrarsysteme GmbH & Co. KG, 49152 Bad Essen (DE)
(72) Erfinder:

(57) **Zusammenfassung**

Zinken für ein vorzugsweise angetriebenes Bodenbearbeitungsgerät, insbesondere für eine Kreiselegge, welcher zum Aufbrechen und Krümeln des Bodens einen Verschleißbereich aufweist und in oder am Kern des Verschleißbereichs ein Hartmetallelement (3) aufweist, welches vorzugsweise im Zinkenkern eingeschrumpft ist oder in Lötmaterial eingebettet ist, wobei der Grundzinken aus vergütetem Stahl besteht.

## Beschreibung

Die Erfindung betrifft einen Zinken für ein Bodenbearbeitungsgerät, insbesondere für eine Kreiselegge, der zum Aufbrechen und Krümeln des Bodens einen Verschleißbereich aufweist, wobei der Zinkengrundkörper aus vergütetem Stahl besteht.

Bei den betrachteten Bodenbearbeitungsgeräten handelt es sich insbesondere um Bodenbearbeitungsgeräte, welche an einem Ackerschlepper angehängt werden. Die Arbeitswerkzeuge unterliegen während der Arbeit durch die Arbeitsgeschwindigkeit und der Maschineneigenmasse einem Verschleiß.

Ein derartiges Arbeitswerkzeug, insbesondere Zinken, ist beispielsweise aus DE 33 29 009 bekannt, welches einen Kreiseleggenzinken zeigt. Bei diesem Zinken befinden sich im Verschleißbereich auf dem vergüteten Stahlgrundkörper Hartmetallund/oder Hartstoffkörner. Nachteilig ist das Verschleißverhalten, wenn die Beschichtung aufgrund der Reibung zwischen der Zinkenspitze und dem Bodenbearbeitungshorizont verschlissen ist.
Die Zinkenspitze reibt dann mit der Maschinenmasse auf dem Bearbeitungshorizont. Es kommt demzufolge an der Zinkenspitze zu Materialauswaschungen, so daß die wirksame Zinkenlänge durch Verschleiß geringer wird.

Bekannt ist auch eine verschleißfeste Beschichtung mittels Eintauchen in ein Schmelzbad, wie in EP 0 108 877 beschrieben. Auch bei diesem Verfahren besteht an der Zinkenspitze nach dem Abnutzen der Verschleißschicht die Gefahr der Materialauswaschung. Außerdem steigt der Leistungsbedarf für den Zinken infolge der Beschichtung gegenüber einem unbeschichteten Standardzinken, weil sich die Zinkenstärke durch die Beschichtung vergrößert.

Aus EP 0 737 415 ist ein Zinken mit einer Hartmetallspitze bekannt. Die Spitze soll den Zinkenverschleiß beim Einstechen in den Boden mindern.

Der Erfindung liegt die Aufgabe zugrunde, den Verschleiß eines Bodenbearbeitungszinkens, insbesondere eines Kreiseleggenzinkens, zu senken. Dabei sollen die Herstellkosten gegenüber den bisher bekannten mit einem Verschleißschutz versehenen Zinken gesenkt werden.

Diese Aufgabe wird erfindungsgemäß dadurch gelöst, daß im oder am Kern des Verschleißbereichs des vorgenannten Zinkens ein Hartmetallelement durch Schrumpfen oder Löten angebracht wird.

Der Zinken benötigt lediglich von der Spitze her im Kern eine oder mehrere Bohrungen für die Aufnahme des Hartmetallelements, wobei sich die Bohrungen nur im Verschleißbereich des Zinkens befinden. Die Zinkenstärke verändert sich dabei nicht. Das Hartmetallelement ist reib- oder formschlüssig mit dem Zinken verbunden.

Zur Verbesserung des Gesamtverschleißverhaltens wird der Zinken im Verschleißbereich noch mit einer Hartmetallschicht umhüllt.

Ein weiteres Ausführungsbeispiel weist einen an der Außenseite des Zinkens angebrachten Verschleißschutz auf. Auch bei dieser Ausführung ändert sich die Zinkenstärke nicht oder nur unwesentlich. Durch das Beibehalten der Zinkenstärke ändert sich der benötigte Leistungsbedarf zum Betreiben des Zinkens nicht gegenüber einem Standardzinken ohne zusätzlichen Verschleißschutz.

Weitere Vorteile und Merkmale der Erfindung gehen aus den Unteransprüchen und den Zeichnungen hervor.

Im Folgenden wird die Erfindung anhand eines Beispiels und mit Bezug auf die beiliegenden Zeichnungen näher beschrieben, wobei
- Fig. 1: in der Vorderansicht einen erfindungsgemäßen Zinken zeigt, der im Verschleißbereich im Schnitt dargestellt ist.
- Fig. 2: zeigt die Seitenansicht, wobei der Verschleißbereich im Schnitt dargestellt ist.
- Fig. 3: zeigt einen Schnitt gemäß Linie I-I in Fig. 1
- Fig. 4 und 5: zeigen einen erfindungsgemäßen Zinken mit einer zusätzlichen Hartmetallummantelung im Verschleißbereich in seiner Seitenansicht und im Schnitt.
- Fig. 6 und 7: zeigen ein weiteres Ausführungsbeispiel des erfindungsgemäßen Zinkens mit einem Hartmetallelement im Außenbereich in seiner Seitenansicht und im Schnitt.
- Fig. 8 und 9: zeigen einen erfindungsgemäßen Zinken mit einem auf der Schneide angebrachten Hartmetallelement in seiner Seitenansicht und im Schnitt
- Fig. 10 und 11: zeigen einen erfindungsgemäßen Zinken mit einem auf der schneidenabgewandten Seite angebrachten Hartmetallelement in seiner Seitenansicht und im Schnitt.
- Fig. 12: zeigt einen weiteren erfindungsgemäßen Zinken in Schnitt mit zwei Schneiden, welche mit Hartmetallschneiden versehen sind.

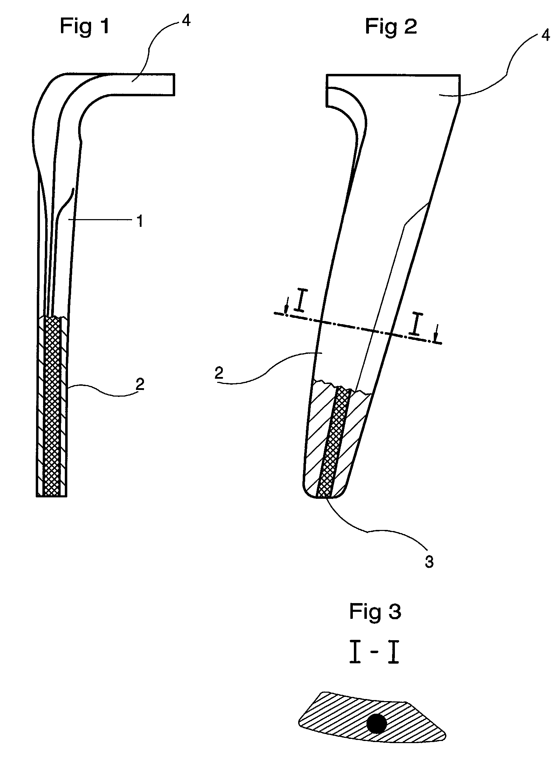

In der Fig. 1 ist der Zinken (1) eines Bodenbearbeitungsgerätes, beispielsweise einer Kreiselegge, dargestellt. Der Verschleißbereich (2) ist im Schnitt dargestellt. Das Hartmetallelement (3) befindet sich am unteren Ende des Zinkens. Der Befestigungsbereich (4) befindet sich im oberen Bereich des Zinkens (1).

In den Fig. 2 + 3 ist die Lage des Hartmetallelements (3) im Zinken dargestellt. Anstelle der im Ausführungsbeispiel gezeigten zylindrischen Form kann das Hartmetallelement (3) auch eine andere Form aufweisen. Es wäre denkbar, für das Hartmetallelement (3) einen Hartmetallstab mit ovalem Querschnitt zu nehmen. Die Bohrung für das Hartmetallelement (3) müßte dann auch eine entsprechende Geometrie aufweisen. Die Stablänge des Hartmetallelements (3) sollte 1/4 bis 2/3 der gesamten Zinkenlänge aufweisen.

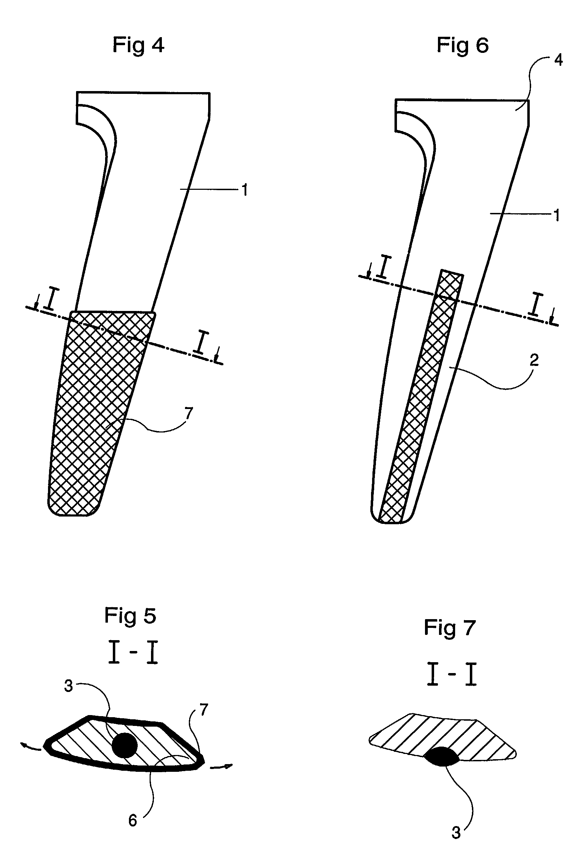

Fig. 4 und 5 zeigen einen Zinken (1) mit einer zusätzlichen umhüllenden Hartmetallbeschichtung (7) im Verschleißbereich (2). Durch diese Kombination von Hartmetallelement (3) im Kern des Zinkens (1) und umhüllender Hartmetallbeschichtung (7) wird die Standzeit des Zinkens (1) erheblich erhöht.

Fig. 6 + 7 zeigen einen Zinken (1) mit einem seitlich im Außenbereich (5) aufgesetzten oder eingesetzten Hartmetallelement (3). Der Zinkenquerschnitt wird durch das Anbringen des Hartmetallelements (3) nicht oder nur unwesentlich größer. Die Antriebsleistung für den Zinken steigt dadurch nicht an.

Der Verschleiß des Zinkens (1) wird, wie im Anwendungsbeispiel beschrieben, verringert. Die Hauptverschleißbeanspruchung kommt auf die Zinkenspitze durch die Reibung auf dem Bearbeitungshorizont. Eine weitere Reibungsbeanspruchung kommt im Außenbereich (5) auf den Zinken (1) durch das Reiben an der unbearbeiteten Bodenschicht über den Bearbeitungshorizont. Diese Reibung ist von Bodenbeschaffenheit abhängig sowie von der Arbeitsgeschwindigkeit und Arbeitstiefe des Zinkens (1).

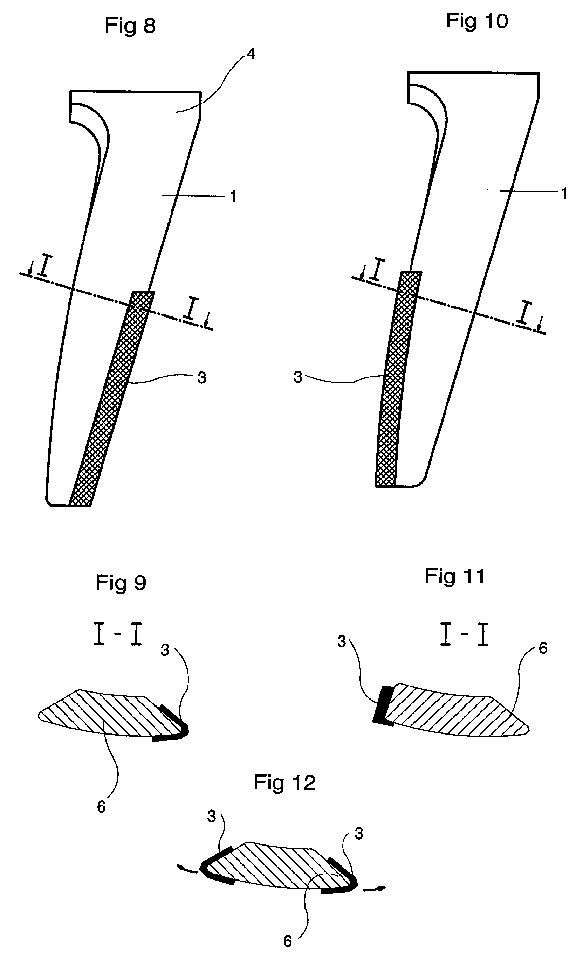

Fig. 8 + 9 zeigen einen Zinken (1) mit einem Hartmetallelement (3) auf der Schneide (6) des Zinkens (1). Der Zinken (1) wird durch das Anbringen auf der Schneide (6) nicht oder nur unwesentlich dicker. Durch Löten oder Kleben wird das Hartmetallelement mit dem Zinken verbunden.
Das in Fig. 10 + 11 dargestellte Ausführungsbeispiel entspricht im wesentlichen Fig. 8 + 9, wobei das Hartmetallelement (3) auf der gegenüberliegenden Seite der Schneide (6) am Zinken (1) angebracht ist. Es ist aber auch denkbar, wie in Fig. 12 dargestellt, daß beidseitig am Zinken (1) eine Schneide (6) mit einem Hartmetallelement (3) angebracht ist, so daß der Zinken (1) für zwei Arbeits- oder Drehrichtungen nutzbar wäre.

### Bezugszeichenliste

- Zinken: (1)
- Verschleißbereich: (2)
- Hartmetallelement: (3)
- Befestigungsbereich: (4)
- Außenbereich: (5)
- Schneide: (6)
- Hartmetallbeschichtung: (7)

## Patentansprüche

1. Zinken für ein vorzugsweise angetriebenes Bodenbearbeitungsgerät, insbesondere einer Kreiselegge, welcher zum Aufbrechen und Krümeln des Bodens einen Verschleißbereich aufweist;
**dadurch gekennzeichnet, daß** sich im Kern des Zinkenverschleißbereichs (2) ein oder mehrere stabförmige Hartmetallelemente (3) befinden, welche vorzugsweise in dem Zinken (1) eingeschrumpft oder eingelötet sind.

2. Zinken nach Anspruch 1, daß der Zinken (1) im Kern ein oder mehrere Hartmetallelemente (3) aufweist und in Verschleißbereich (2) mit einer Hartmetallbeschichtung (7) umhüllt ist.

3. Zinken nach Anspruch 1, daß sich das oder die Hartmetallelemente (3) im Außenbereich (5) des rotierenden Zinkens (1) befinden.

4. Zinken nach Anspruch 1, daß sich auf oder an der Schneide (6) des Zinkens ein oder mehrere Hartmetallelemente (3) befinden.

5. Zinken nach Anspruch 4, daß ein oder mehrere Hartmetallelemente (3) gegenüberliegend von der Schneide (6) angebracht sind.

6. Zinken nach Anspruch 4 und 5, daß sowohl auf oder an der Schneide (6) des Zinkens (1) sowie auf der schneidenabgewandten Seite Hartmetallelemente (3) angebracht sind.

7. Zinken nach Anspruch 3 bis 5, daß der Zinken (1) beidseitig in Arbeitsrichtung oder Drehrichtung eine mit Hartmetallelementen (3) bestückte Schneide (6) hat.
